# EUROPÄISCHE PATENTANMELDUNG

(11) **EP 0 843 104 A2**
(43) Veröffentlichungstag der Anmeldung: **20.05.1998**
(21) Anmeldenummer: 97118805.7
(22) Anmeldetag: 29.10.1997
(51) Int. Cl.: F16B 12/50

(54) **Vorrichtung zum Verbinden dreier Längselemente**

(30) Priorität: 16.11.1996 DE 29619965 U
(71) Anmelder: FESTO AG & Co, 73734 Esslingen (DE)
(72) Erfinder: Stoll, Kurt, Dr., 73732 Esslingen (DE)
(74) Vertreter: Abel, Martin, Dipl.-Ing.

(57) **Zusammenfassung**

Bei der Erfindung handelt es sich um eine Vorrichtung zum rechtwinkligen Verbinden dreier Längselemente (4) an einer Knotenstelle (5). Die Vorrichtung weist einen dreiarmigen Verbindungskörper (9) auf, dessen Arme mittels einer Spanneinrichtung (28) lösbar an jeweils einem Längselement (4) festlegbar sind. Die Spanneinrichtung (28) enthält einen in einer am Längselement (4) vorgesehenen Verankerungsnut (33) positionierbaren Nutenstein (34) mit dem ein sich am Arm (10) abstützendes Befestigungselement (29) zusammenarbeitet. Ein jeweiliger Arm (10) ist als Winkelelement (15) ausgebildet, das zwei rechtwinkelig miteinander verbundene Halteschenkel (14) aufweist, die mit dem jeweils benachbarten Halteschenkel (14) des sich anschließenden Winkelelements (15) verbunden sind. Jedes Winkelelement (15) ist mit den Innenflächen (18) seiner beiden Halteschenkel (14) flächig an zwei benachbarte Längsseiten des zugeordneten Längselements (4) anlegbar und übergreift die jeweils zugeordnete Verankerungsnut (33), so daß jeder Halteschenkel (14) mittels der betreffenden Spanneinrichtung (28) mit dem zugeordneten Längselement (4) verspannbar ist. Jeder Halteschenkel (14) ist mit dem sich rechtwinkelig anschließenden Halteschenkel (14) des benachbarten Winkelelements (15) zusätzlich mittels eines Versteifungskörpers (52) verbunden.

## Beschreibung

Die Erfindung betrifft eine Vorrichtung zum Verbinden dreier Längselemente an einer Knotenstelle, wobei jedes Längselement rechtwinkelig zu den beiden anderen Längselementen verläuft, mit einem dreiarmigen Verbindungskörper, dessen drei Arme ebenfalls rechtwinkelig zueinander ausgerichtet und an ihren der Knotenstelle zugewandten inneren Armenden einstückig miteinander verbunden sind, wobei jeder Arm an einem Längselement anlegbar und mit diesem mittels wenigstens einer Spanneinrichtung lösbar verbindbar ist, die einen in einer am Längselement vorgesehenen, in dessen Längsrichtung verlaufenden Verankerungsnut positionierbaren Nutenstein und ein mit dem Nutenstein zusammenarbeitendes, sich am Arm abstützendes Befestigungselement enthält.

Eine derartige Vorrichtung geht aus der DE-PS 817 191 hervor. Sie wird beispielsweise beim Aufbau von Rahmen, Gestellen, Gerüsten und ähnlichem eingesetzt. Nachteilig bei dieser Konstruktion ist, daß die Vorrichtung keine ausreichende Festigkeit, insbesondere gegenüber an den Längselementen auftretenden Biegemomenten um die Knotenstelle aufweist. Desweiteren ist der Aufbau der bekannten Vorrichtung auf Längselemente mit ganz spezieller Ausgestaltung abgestellt und standardisierte Längselemente mit rechteckigem Querschnitt sind damit nicht verbindbar.

Es ist daher die Aufgabe dieser Erfindung, eine Vorrichtung zum Verbinden dreier Längselemente zu schaffen, die eine ausreichende Festigkeit bei einfacher Montage der Vorrichtung gewährleistet und die es erlaubt, Längselemente mit reckteckigem Querschnitt stabil zu verbinden.

Diese Aufgabe wird erfindungsgemäß dadurch gelöst, daß zur Verbindung von Längselementen, die einen rechteckigen Querschnitt und an mindestens zwei benachbarten Längsseiten eine Verankerungsnut aufweisen, ein jeweiliger Arm als Winkelelement ausgebildet ist, das zwei im Querschnitt gesehen rechtwinkelig miteinander verbundene Halteschenkel aufweist, wobei die Halteschenkel eines jeweiligen Winkelelementes derart mit jeweils einem Halteschenkel von einem der beiden anderen Winkelelemente verbunden sind, daß sich die zwischen den Halteschenkeln eines jeweiligen Winkelelementes verlaufenden Verbindungskanten in einem gemeinsamen Punkt treffen, so daß ein jeweiliges Winkelelement mit den Innenflächen seiner beiden Halteschenkel flächig an zwei benachbarten Längsseiten des zugeordneten Längselementes anlegbar ist und dabei die einer jeweiligen Längsseite zugeordnete Verankerungsnut derart übergreift, daß das Winkelelement mit jedem Halteschenkel unter Vermittlung einer diesem zugeordneten Spanneinrichtung mit dem zugeordneten Längselement verspannbar ist, und daß die zwei im Bereich der inneren Armenden jeweils miteinander verbundenen Halteschenkel zweier Winkelelemente im Bereich ihrer jeweiligen, der Verbindungskante abgewandten Außenkanten mittels eines Versteifungskörpers untereinander verbunden sind.

Auf diese Weise lassen sich insbesondere auch einen rechteckigen Querschnitt aufweisende Längselemente sehr einfach und stabil unter rechtwinkeliger Ausrichtung miteinander verbinden. Durch die als Winkelelemente aufgebauten Arme des Verbindungskörpers besteht die Möglichkeit, jeden dieser Arme an zwei verschiedenen Längsseiten eines zugeordneten Längselementes mittels der zugeordneten Spanneinrichtung zu befestigen und so eine sichere Verbindung zu gewährleisten. Die jeweils zwischen zwei Armen des Verbindungskörpers angeordneten Versteifungskörper erhöhen die Festigkeit der Vorrichtung wesentlich. Auch gegenüber im Bereich der Knotenstelle auftretenden Biegemomenten ist diese Vorrichtung überaus stabil. Infolge der Ausrichtung der durch Winkelelemente gebildeten Arme ist die Vorrichtung von einer Seite her mit den zugeordneten Längselementen verbindbar, woraus eine einfache Montage der Vorrichtung resultiert.

Vorteilhafte Weiterbildungen des Gegenstandes der Erfindung gehen aus den Unteransprüchen hervor.

Zweckmäßigerweise sind die Versteifungskörper von dreieckförmigen, einen rechten Winkel aufweisenden, insbesondere gleichschenkeligen Dreiecksplatten gebildet, deren rechter Winkel den jeweils zugeordneten inneren Armenden zugewandt ist. Ein derartiger Versteifungskörper benötigt wenig Platz, vermeidet vorstehende Ecken und Kanten und gewährleistet eine sehr hohe Stabilität.

Es ist weiterhin vorteilhaft, wenn die Versteifungskörper über die gesamte Länge der zugeordneten Halteschenkel mit diesen verbunden sind. Auf diese Weise können die Versteifungskörper bei einem um die Knotenstelle auftretenden Biegemoment die größtmögliche Kraft aufnehmen und dementsprechend eine gute Festigkeit des Verbindungskörpers gewährleisten.

Vorzugsweise verfügt ein jeweiliger Halteschenkel zur Hindurchführung eines Befestigungselementes über wenigstens eine, mit der von diesem Halteschenkel übergriffenen Verankerungsnut des zugeordneten Längselementes fluchtende Durchbrechung. Insbesondere kann das Befestigungselement von einer Schraube gebildet sein. Daraus ergibt sich eine sehr einfache Möglichkeit, in Verbindung mit einem zugeordneten Nutenstein eine Spanneinrichtung zu realisieren. Gleichzeitig wird außerdem eine sichere Verbindung zwischen Verbindungskörper und zugeordnetem Längselement erreicht.

Die Erfindung wird im folgenden anhand der beiliegenden Zeichnung näher erläutert. Es zeigt:
- Figur 1: eine bevorzugte Ausführungsform der erfindungsgemäßen Vorrichtung mit einem Verbindungskörper und den zugeordneten Längselementen im Schrägbild,

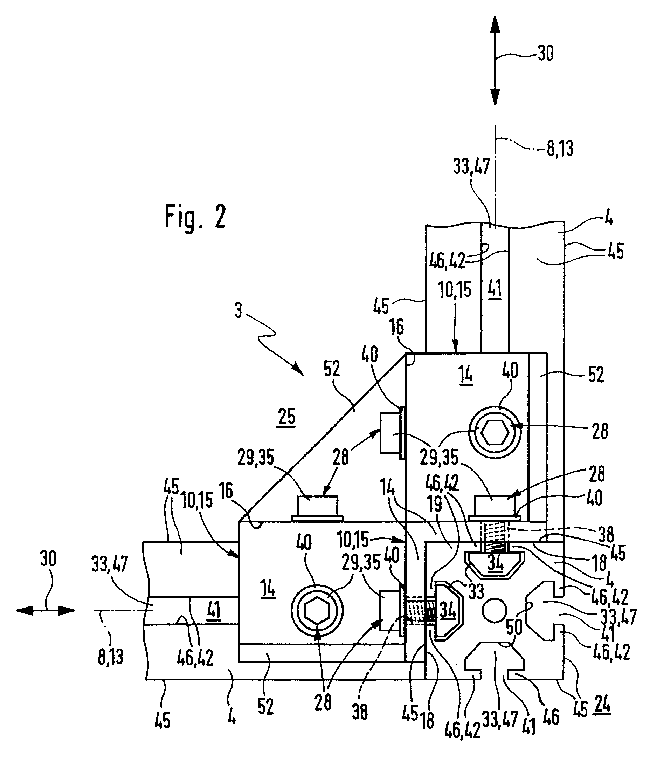

- Figur 2: die Vorrichtung aus Figur 1 in einer Seitenansicht gemäß Pfeil II.

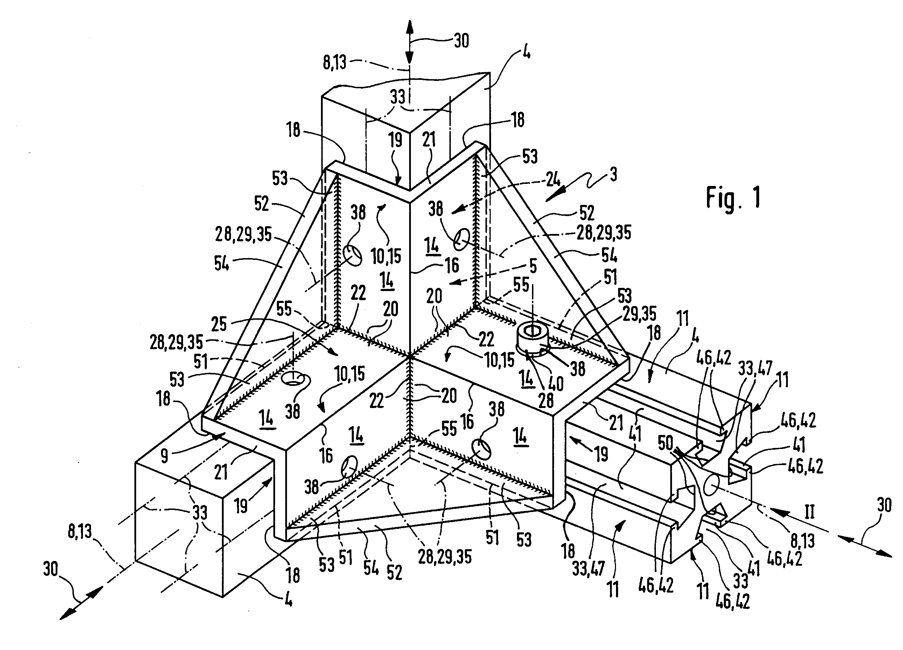

In Figur 1 ist eine Vorrichtung 3 zum Verbinden dreier Längselemente 4 dargestellt. Mit Hilfe derartiger Vorrichtungen 3 lassen sich aus Längselementen 4 beliebige Konstruktionen wie beispielsweise Rahmen, Gestelle oder Gerüste aufbauen. Die Längselemente 4 sind zweckmäßigerweise als Strangpreß-Profilteile ausgeführt und bestehen vorzugsweise aus Aluminiummaterial.

Die beispielsgemäße Vorrichtung ermöglicht die lösbare feste Verbindung von Längselementen 4 in einer Weise, daß jedes Längselement, wie abgebildet, rechtwinkelig zu den beiden anderen Längselementen 4 ausgerichtet ist. Alle drei Längselemente bilden so eine Knotenstelle 5, in der sich die jeweiligen Längsachsen 8 der Längselemente 4 schneiden. Die Knotenstelle 5 kann als Ecke ausgebildet sein, falls sich alle drei Längselemente 4 von der Knotenstelle 5 aus entlang ihrer jeweiligen Längsachse 8 nur in eine Richtung erstrecken. Im Gegensatz dazu ist es selbstverständlich auch möglich, daß sich ein Längselement 4 entlang seiner Längsachse 8 durch die Knotenstelle 5 hindurch in beide Richtungen erstreckt.

Gemäß Figur 1 enthält die Vorrichtung 3 einen dreiarmigen Verbindungskörper 9, dessen drei Arme 10 an jeweils einem der zu verbindenden Längselemente 4 anliegen und so deren Position relativ zueinander festlegen. Um die Längselemente 4 in der oben beschriebenen Position zu fixieren, sind die Arme 10 des Verbindungskörpers 9 ebenfalls rechtwinkelig zueinander ausgerichtet. Die Längsachsen 13 der Arme 10 stehen dabei entsprechend einem kartesischen Koordinatensystem senkrecht aufeinander. Ein jeweiliger Arm 10 ist als Winkelelement 15 ausgebildet und weist zwei im Querschnitt gesehen rechtwinkelig miteinander verbundene Halteschenkel 14 auf, die an einer parallel zur Längsachse 13 verlaufenden Verbindungskante 16 einstückig aneinander festgelegt sind.

Die beispielsgemäße Verbindungsvorrichtung ermöglicht insbesondere das Verbinden von Längselementen 4, die einen rechteckförmigen Querschnitt aufweisen und vier rechtwinkelig zueinander ausgerichtete Längsseiten 11 besitzen. Im vorliegenden Ausführungsbeispiel verfügen die Längselemente 4 dabei über einen quadratischen Querschnitt. Die Längselemente 4 sind somit derart an einen jeweils zugeordneten, von einem Winkelelement 15 gebildeten Arm 10 eines Verbindungskörpers 9 anlegbar, daß ein jeweiliges Winkelelement 15 mit seinen beiden dem zugeordneten Längselement 4 zugewandten Innenflächen 18 an zwei einander unmittelbar benachbarten Längsseiten dieses Längselementes 4 flächig anliegt. Die an den Halteschenkeln 14 vorgesehenen Innenflächen 18 eines jeweiligen Winkelelementes 15 schließen einen rechten Winkel ein und begrenzen somit einen Teilraum, der als Aufnahmebereich 19 bezeichnet sei.

Die als Winkelelemente 15 ausgebildeten Arme 10 des Verbindungskörpers 9 sind nun an ihren der Knotenstelle 5 zugewandten, axial inneren Armenden 20 derart einstückig miteinander verbunden, daß sich an eine jeweilige Innenfläche 18 eines Halteschenkels 14 eines Winkelelementes 15 im Bereich des ihr zugeordneten inneren Armendes 20 eine Innenfläche 18 eines Halteschenkels 14 eines anderen Winkelelementes 15 anschließt. Die im Bereich eines jeweiligen inneren Armendes 20 aneinander angrenzenden Innenflächen 18 unteschiedlicher Winkelelemente 15 schließen hierbei einen Winkel von etwa 270° ein. Für die einem jeweiligen Längselement 4 abgewandte Außenfläche 23 eines jeweiligen Halteschenkels 14 gilt entsprechend, daß zwei jeweilige Außenflächen 23 von Halteschenkeln 14 unterschiedlicher Winkelelemente 15, die im Bereich der ihnen jeweils zugeordneten inneren Armenden 20 aneinander angrenzen, einen Winkel von etwa 90° einschließen.

Die Winkelelemente 15 sind also im Bereich ihrer einander zugewandten inneren Armenden 20 derart verbunden, daß im Bereich eines jeweiligen inneren Armendes 20 auf der den Längselementen 4 zugewandten Seite des Verbindungskörpers 9 jeweils Innenflächen 18 jeweiliger Halteschenkel 14 aneinander angrenzen, und daß auf der entgegengesetzten, den Längselementen 4 abgewandten Seite des Verbindungskörpers 9 jeweils Außenflächen 23 der Halteschenkel 14 aneinander anschließen. Auf diese Weise definiert der Verbindungskörper 9 einen in Richtung der Innenflächen 18 weisenden Innenbereich 24 und einen komplementär dazu ausgebildeten, in Richtung der jeweiligen Außenflächen 23 weisenden Außenbereich 25. Die Längselemente 4 befinden sich in dem Innenbereich 24.

Nocheinmal anders ausgedrückt heißt dies, daß sich die quer zu den Längsachsen 13 verlaufenden Verbindungslinien 22 der inneren Armenden 20 und die Verbindungskanten 16 der Winkelelemente 15 in einem gemeinsamen Punkt treffen. Infolge dieses Aufbaues des Verbindungskörpers 9 ist das Anlegen desselben an die von einer Knotenstelle 5 ausgehenden Längselemente 4 von einer Seite her möglich.

Zur lösbaren Befestigung des Verbindungskörpers 9 an den Längselementen 4 sind Spanneinrichtungen 28 vorgesehen. Im vorliegenden Ausführungsbeispiel ist jedem Halteschenkel 14 eines von einem Winkelelement 15 gebildeten Armes 10 eine eigene Spanneinrichtung 28 zugeordnet. Die beispielsgemäßen Spanneinrichtungen 28 weisen jeweils ein sich am zugeordneten Halteschenkel 14 abstützendes Befestigungselement 29 und einen in einer an einem jeweiligen Längselement 4 vorgesehenen, in dessen Längsrichtung 30 verlaufende Verankerungsnut 33 gehaltenen Nutenstein 34 auf. Das Befestigungselement 29 ist beispielsgemäß von einer Schraube 35 gebildet.

In Figur 1 sind die Verankerungsnuten 33 bzw. die Schrauben 35 zum Teil durch strichpunktierte Linien schematisch angedeutet. Diese strichpunktierten Linien geben lediglich die Position der Verankerungsnuten 33 bzw. der Schrauben 35 an, wobei deren Gestalt den beispielhaft dargestellten Verankerungsnuten 33 bzw. Schrauben 35 entspricht.

Jedes Längselement 4 weist wenigstens an zwei benachbarten Längsseiten 11 eine Verankerungsnut 33 auf. Vorzugsweise ist jedes Längselement 4 jedoch an jeder Längsseite 11 mit wenigstens einer insbesondere mittig verlaufenden Verankerungsnut 33 versehen.

Eine jeweilige Verankerungsnut 33 ist hinterschnitten ausgebildet. Im Querschnitt gesehen ist die an einer jeweiligen Längsseite 11 in Längsrichtung 8 verlaufende schlitzartige Nutöffnung 41 einer jeweiligen Verankerungsnut 33 entlang ihrer beiden Längsseiten 42 durch jeweils einen parallel zur Außenfläche 45 des Längselementes 4 verlaufenden Vorsprung 46 verengt. Von der Nutöffnung 41 aus nach innen betrachtet schließt sich an diese ein zur verschiebbaren Aufnahme und Positionierung des Nutensteines 34 vorgesehener erweiterter Verankerungsabschnitt 47 an, der sich zu dem der Nutöffnung 41 gegenüberliegenden, innenliegenden Nutgrund 50 der Verankerungsnut 33 hin wiederum verengen kann.

Ein jeweiliger Halteschenkel 14 weist eine Durchbrechung 38 auf, die bei im Aufnahmebereich 19 angesetztem Längselement 4 mit einer Verankerungsnut 33 an der zugewandten Längsseite 11 des zugeordneten Längselementes 4 fluchtet. Die betreffende Verankerungsnut 33 wird dabei vom zugeordneten Halteschenkel 14 übergriffen. Jeder Durchbrechung 38 ist eine der erwähnten Schrauben 35 zugeordnet, die so von außen her durch die zugeordnete Durchbrechung 38 hindurchführbar ist, daß sich ihr Schraubenkopf auf der Außenfläche 23 des zugeordneten Halteschenkels 14 abstützt. Zwischen einen jeweiligen Schraubenkopf und der Außenfläche 23 eines jeweils zugeordneten Halteschenkels 14 kann noch wie abgebildet eine Unterlagscheibe 40 zwischengeschaltet sein.

Das beispielsgemäß als Schraube 35 ausgebildete Befestigungselement 29 greift in verbundenem Zustand durch die Durchbrechung 38 und die fluchtende Nutöffnung 41 hindurch in den zugeordneten Nutenstein 34 ein, so daß das zugeordnete Längselement 4 mittels der vom Nutenstein 34 beaufschlagten Vorsprünge 46 an die Innenfläche 18 des zugeordneten Halteschenkels 14 angepreßt wird. Um ein Beaufschlagen des Nutensteines 34 durch die Schraube 35 zu ermöglichen, ist in diesen ein nicht näher dargestelltes Innengewinde eingebracht. Auf diese Weise wird ein jeweiliges Längselement 4 an zwei benachbarten Längsseiten 11 mit dem zugeordneten Arm 10 des Verbindungskörpers 4 verspannt.

Jeweils zwei Halteschenkel 14 unterschiedlicher Winkelelemente 15, die im Bereich eines jeweiligen inneren Armendes 20 eine einstückige Verbindung aufweisen, sind entlang ihrer in Längsrichtung 30 verlaufenden, der Verbindungskante 16 abgewandten Außenkanten 51 mittels eines in sich starren Versteifungskörpers 52 untereinander verbunden. Der beispielsgemäße Versteifungskörper 52 weist eine plattenähnliche Form und eine rechtwinkelige Ecke 55 auf. Dabei ist diese rechtwinkelige Ecke 55 den beiden inneren Armenden 20 der zugeordneten Halteelemente 14 zugewandt und liegt im Bereich der Verbindungslinien 22 an den inneren Armenden 20 an. In der Seitenansicht hat der Versteifungskörper 52 beispielsgemäß eine dreieckige Gestalt. Die Kantenlänge der Katheten dieses rechtwinkeligen Dreieckes entspricht der jeweiligen Länge des zugeordneten Halteschenkels 14, wobei ein jeweiliger Versteifungskörper 52 mit seinen Kathetenkanten 53 an einem jeweiligen Halteschenkel 14 in Längsrichtung 30 gesehen über die gesamte Länge dessen Außenkante 51 festgelegt ist. Beim vorliegenden Ausführungsbeispiel ist die Länge der Halteschenkel 14 in einer jeweiligen Längsrichtung 30 jeweils gleich groß, so daß der Versteifungskörper 52 in der Seitenansicht die Gestalt eines rechtwinkeligen, gleichschenkeligen Dreieckes annimmt.

Die die Hypotenuse des Dreieckes bildende Abschlußkante 54 der Versteifungskörper 52 erstreckt sich schräg zwischen den äußeren Armenden 21 der jeweils verbundenen Halteschenkel 14. Dadurch sind vorspringende Ecken vermieden und man erhält einen kompakten Aufbau.

Beim vorliegenden Ausführungsbeispiel sind die Versteifungskörper 52 durch entlang den Kathetenkanten 53 verlaufende Schweißverbindungen am jeweils zugeordneten Halteschenkel 14 festgelegt. Auch die einstückige Verbindung zwischen den Winkelelementen 15 im Verbindungsbereich ihrer inneren Arme 20 ist Zweckmäßigerweise durch Schweißverbindungen verwirklicht.

Der gesamte Verbindungskörper 9 besteht zweckmäßigerweise aus Metall wie Stahl oder Aluminiummaterial, er könnte prinzipiell aber auch aus Kunststoffmaterial gefertigt sein. Er könnte anstelle einer einstückigen Zusammenfügung mehrerer Elemente auch als einteiliges Element gefertigt sein, beispielsweise als Gußteil.

## Patentansprüche

1. Vorrichtung zum Verbinden dreier Längselemente (4) an einer Knotenstelle (5), wobei jedes Längselement (4) rechtwinkelig zu den beiden anderen Längselementen (4) verläuft, mit einem dreiarmigen Verbindungskörper (9), dessen drei Arme (10) ebenfalls rechtwinkelig zueinander ausgerichtet und an ihren der Knotenstelle (5) zugewandten inneren Armenden (20) einstückig miteinander verbunden sind, wobei jeder Arm (10) an einem Längselement (4) anlegbar und mit diesem mittels wenigstens einer Spanneinrichtung (28) lösbar verbindbar ist, die einen in einer am Längselement (4) vorgesehenen, in dessen Längsrichtung (30) verlaufenden Verankerungsnut (33) positionierbaren Nutenstein (34) und ein mit dem Nutenstein (34) zusammenarbeitendes, sich am Arm (10) abstützendes Befestigungselement (29) enthält, dadurch gekennzeichnet, daß zur Verbindung von Längselementen (4), die einen rechteckigen Querschnitt und an mindestens zwei benachbarten Längsseiten eine Verankerungsnut (33) aufweisen, ein jeweiliger Arm (10) als Winkelelement (15) ausgebildet ist, das zwei im Querschnitt gesehen rechtwinkelig miteinander verbundene Halteschenkel (14) aufweist, wobei die Halteschenkel (14) eines jeweiligen Winkelelementes (15) derart mit jeweils einem Haltschenkel (14) von einem der beiden anderen Winkelelemente (15) verbunden sind, daß sich die zwischen den Halteschenkeln (14) eines jeweiligen Winkelelementes (15) verlaufenden Verbindungskanten (16) in einem gemeinsamen Punkt treffen, so daß ein jeweiliges Winkelelement (15) mit den Innenflächen (18) seiner beiden Halteschenkel (14) flächig an zwei benachbarten Längsseiten des zugeordneten Längselementes (4) anlegbar ist und dabei die einer jeweiligen Längsseite Zugeordnete Verankerungsnut (33) derart übergreift, daß das Winkelelement (15) mit jedem Halteschenkel (14) unter Vermittlung einer diesem zugeordneten Spanneinrichtung (28) mit dem zugeordneten Längselement (4) verspannbar ist, und daß die zwei im Bereich der inneren Armenden (20) jeweils miteinander verbundenen Halteschenkel (14) zweier Winkelelemente (15) im Bereich ihrer jeweiligen, der Verbindungskante (16) abgewandten Außenkanten (51) mittels eines Versteifungskörpers (52) untereinander verbunden sind.

2. Vorrichtung nach Anspruch 1, dadurch gekennzeichnet, daß die Versteifungskörper (52) von dreieckförmigen, einen rechten Winkel aufweisenden, insbesondere gleichschenkeligen Dreiecksplatten gebildet sind, deren rechter Winkel den jeweils zugeordneten inneren Armenden (20) zugewandt ist.

3. Vorrichtung nach Anspruch 1 oder 2, dadurch gekennzeichnet, daß die Versteifungskörper (52) über die gesamte Länge der zugeordneten Halteschenkel (14) mit diesen verbunden sind.

4. Vorrichtung nach einem der Ansprüche 1 bis 3, dadurch gekennzeichnet, daß die Versteifungskörper (52) zur einstückigen Verbindung mit den Armen (10) durch Schweißverbindungen an den betreffenden Halteschenkeln (14) festgelegt sind.

5. Vorrichtung nach einem der Ansprüche 1 bis 4, dadurch gekennzeichnet, daß die Arme (10) des Verbindungskörpers (9) zu Ihrer einstückigen Verbindung durch Schweißverbindungen aneinander festgelegt sind.

6. Vorrichtung nach einem der Ansprüche 1 bis 5, dadurch gekennzeichnet, daß die Längselemente (4) einen quadratischen Querschnitt aufweisen.

7. Vorrichtung nach einem der Ansprüche 1 bis 6, dadurch gekennzeichnet, daß die Längselemente (4) auf jeder Längsseite wenigstens eine längsverlaufende Verankerungsnut (33) aufweisen.

8. Vorrichtung nach einem der Ansprüche 1 bis 7, dadurch gekennzeichnet, daß ein jeweiliger Halteschenkel (14) zur Durchführung eines Befestigungselementes (29) wenigstens eine bei angesetztem Längselement (4) mit der von diesem Halteschenkel (14) übergriffenen Verankerungsnut (33) des Längselementes (4) fluchtende Durchbrechung (38) aufweist.

9. Vorrichtung nach einem der Ansprüche 1 bis 8, dadurch gekennzeichnet, daß das Befestigungselement (29) von einer Schraube (35) gebildet ist.
